# EUROPÄISCHE PATENTSCHRIFT

(11) **EP 2 090 774 B1**
(45) Veröffentlichungstag und Bekanntmachung des Hinweises auf die Patenterteilung: **02.07.2014**
(21) Anmeldenummer: 08151326.9
(22) Anmeldetag: 12.02.2008
(51) Int. Cl.: F03B 13/14, F03D 9/00

(54) **Wellenenergieunterstützte Windkraftanlage**
Wind power facility supplemented by wave energy
Eolienne soutenue par l'énergie provenant de la houle

(43) Veröffentlichungstag der Anmeldung: 19.08.2009
(73) Patentinhaber: Earthfly Holding GmbH, 6020 Innsbruck (AT)
(72) Erfinder: Vogt, Christian Dipl.-Math., 81547 München (DE)
(74) Vertreter: Kilian Kilian & Partner

(56) Entgegenhaltungen:
- DE-U1- 20 117 211
- FR-A- 2 438 179
- JP-A- 57 171 080
- US-A- 4 741 157
- US-A1- 2002 145 288

## Beschreibung

Die vorliegende Erfindung betrifft eine Windkraftanlage und insbesondere eine Offshore-Windkraftanlage.

Windkraftanlagen sind allgemein bekannt und werden zur ökologisch verträglichen Energieerzeugung verwendet. Für einen wirtschaftlichen Betrieb müssen die Windkraftanlagen an Orten aufgestellt werden, an denen die Windbedingungen günstig sind. Aus diesem Grund werden Windkraftanlagen an der Küste und im verstärkten Maße auch in Küstengewässern, weil in diesen gute Windbedingungen herrschen, aufgestellt.

Eine weitere Energiegewinnungsart, die bis jetzt wenig zum Einsatz gekommen ist, ist die Ausnutzung von Wellenenergie. Ein bekanntes Prinzip zur Nutzung von Wellenenergie ist z. B. das OWC-Prinzip (Oscillating water column), bei dem eine Weiterbewegung, die in einem abgeschlossenen Raum auftritt, zu einem über eine Turbine geleiteten Luftstrom führt. Dieses Prinzip kommt z. B. in einem auf der schottischen Insel Islay gebauten Kraftwerk zum Einsatz, wobei zur Errichtung des Kraftwerkes mit Baumaßnahmen massiv in die Natur eingegriffen werden musste.

Nachdem Windkraftanlagen zur Ausnutzung besserer Windverhältnisse, wie oben erwähnt, verstärkt in Küstengewässern aufgestellt werden, wäre es wünschenswert, Offshore-Windkraftanlagen zur Ausnutzung der ebenfalls vorhandenen Wellenenergie mit einem Wellenenergieabnehmer zu koppeln.

Aus der US-Patentveröffentlichung mit der Nummer US 2002/145288 A1 ist beispielsweise eine mit einem Wellenenergieabnehmer kombinierte Windkraftanlage bekannt. Bei dieser Anlage ist eine Turbine innerhalb eines Schwimmkörpers angeordnet, wobei ein Luftstrom über die Turbine durch einen sich mit der Wellenbewegung ausdehnenden und zusammenziehenden Balg erzeugt wird. Auf dem Schwimmkörper ist zusätzlich eine Windkraftanlage vorgesehen.

Weiterhin ist aus der japanischen Patentveröffentlichung mit der Nummer JP 57 171080 A eine mit einem Wellenenergieabnehmer kombinierte Windkraftanlage bekannt. Bei dieser Windkraftanlage wird ein Luftstrom über eine Turbine durch zwei Darrieusläufer erzeugt. Zusätzlich zu der so genutzten Windenergie kann noch vorhandene Wellenenergie in der Weise genutzt werden, dass der durch die Darrieusläufer erzeugte Luftstrom durch einen durch Wellenbewegung erzeugten Luftstrom verstärkt wird.

Es ist daher Aufgabe der Erfindung eine Offshore-Windkraftanlage zu schaffen, mit der gleichzeitig Wellenenergie genutzt werden kann.

Diese Aufgabe wird mit einer Anordnung mit den Merkmalen des Patentanspruches 1 gelöst.

Vorzugsweise wird hierfür eine konventionelle Windkraftanlage mit einem Wellenenergieabnehmer nach dem OWC-Prinzip gekoppelt.

Insbesondere wird hierfür eine Turbine, vorzugsweise eine Wells-Turbine, innerhalb des Turms der Windkraftanlage in einer Röhre, in der die Luftbewegung aufgrund der Wellen über die Turbine abgenommen werden kann, vorgesehen.

Bevorzugte Ausführungen und Weiterbildungen sind Gegenstand der Unteransprüche.

Vorteilhaft an der ganzen Anlage ist, dass in Gebieten in denen die Windbedingungen für eine Windkraftanlage sehr günstig sind, auch die durch diesen Wind erzeugten Wellen und deren Energie genutzt werden können, wobei diese Nutzung, wie auch das natürliche Phänomen der Zeitversetzung zwischen Wind und Wellen, zeitversetzt sein kann. Im Folgenden werden bevorzugte Ausführungsformen der erfindungsgemäßen Windkraftanlage unter Bezug auf die beigefügten Zeichnungen beschrieben werden.

In diesen zeigt
Fig. 1 eine erste bevorzugte Ausführungsform der erfindungsgemäßen Windkraftanlage,
Fig. 2 eine zweite bevorzugte Ausführungsform der erfindungsgemäßen Windkraftanlage,
Fig. 3 eine Abwandlung der zweiten Ausführungsform der erfindungsgemäßen Windkraftanlage und
Fig. 4 schematisch das Profil der Turbinenblätter einer Wells-Turbine und die daran angreifenden Kräfte.

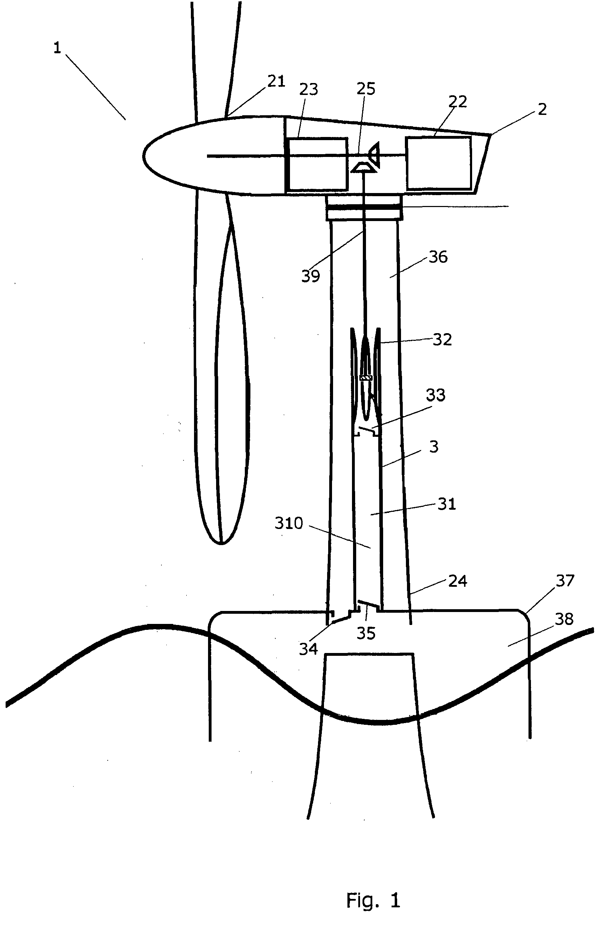

Unter Bezug auf Fig. 1 wird eine erste Ausführungsform der erfindungsgemäßen Windkraftanlage beschrieben werden. Allgemein kann die Erfindung auf jede konventionelle Windkraftanlage angewendet werden. Eine Windkraftanlage umfasst ein Windrad 21, das mit zwei oder drei Rotorblättern ausgestattet ist, eine Maschinengondel 2, in der die elektrische Energie erzeugende Generator 22 und ggf. weitere mechanische Elemente aufgenommen sind, und einen Turm, auf dem die Maschinengondel 2 zusammen mit dem Windrad 21 montiert wird. Die Rotorblätter des Windrades 21 sind typischerweise zwischen 40 und 90 m lang, wobei die Längen der Rotorblätter für spezielle Einsatzgebiete hiervon abweichen können.

Der in der Maschinengondel 2 aufgenommene Generator ist normalerweise entweder ein Drehstromasynchron- oder ein Drehstromsynchrongenerator, der über mechanische Elemente 25, vorzugsweise eine Welle, mit dem Windrad 21 zur Umwandlung der Windenergie in elektrische Energie verbunden ist. Wenn der Generator 22 ein Asynchrongenerator ist, ist in der Maschinengondel 2 weiterhin ein Getriebe 23, das zwischen dem Windrad 21 und dem Generator 22 angeordnet ist, installiert. Dieses Getriebe 23 dient zur Anpassung der Drehzahl des Windrades 21 an die Drehzahl des Generators 22, wodurch der Generator 22 über einen weiten Drehzahlbereich betrieben werden kann.

In einer weiteren Variante kann der Generator 22 ein Drehstromsynchrongenerator sein, bei dessen Einsatz die Installation eines Getriebes 23 nicht nötig ist und das Windrad 21 über die Welle 25 direkt mit dem Generator 22 verbunden werden kann. Bei dieser Betriebsweise schwankt die durch den Generator 22 erzeugte Spannung mit der Drehzahl des Windrades 21, die entweder durch Pitchen der Rotorblätter, d. h. mit Veränderung der Neigung dieser, oder durch eine nicht gezeigte Bremse zur Verringerung der Drehzahl des Windrades 21 angepasst werden kann.

Alternativ hierzu kann der durch den Synchrongenerator 22 erzeugte Strom gleichgerichtet werden und über einen Wechselrichter wiederum in einen Wechselstrom umgeformt werden, um an Frequenz und Phase des zu speisenden Netzes angepasst zu werden. Vorteilhaft hierbei ist, dass das Windrad 21 mit optimal gepitchten Stellungen der Rotorblätter betrieben werden kann.

Es sei an dieser Stelle erwähnt, dass auch die Windkraftanlage mit einem Asynchrongenerator eine Bremse und Mittel zum Pitchen der Rotorblätter aufweisen kann. Außerdem können in beiden Varianten der Generatoren 22 noch vorteilhafte Elemente, wie z. B. Frequenzumrichter, zur Anpassung der erzeugten Spannung an die Netzbedingungen, vorgesehen sein.

Die gesamte Maschinengondel 2 ist auf dem Turm 24 befestigt und lässt sich über ein Gelenk 26 je nach vorliegender Windrichtung ausrichten.

Der Turm 24 kann eine Höhe zwischen 40 und 130 m haben und aus einem einzigen Element oder aus Segmenten konstruiert sein. Bisher haben sich sowohl Konstruktionen aus Beton in Gleitschalung oder in Fertigteilbauweise als auch Konstruktionen aus Stahl durchgesetzt. Die Konstruktion der erfindungsgemäßen Windkraftanlage ist aber hierauf nicht beschränkt und jede andere Konstruktionsweise des Turmes 24 kann ebenfalls in Betracht gezogen werden.

Für die benötigte Standfestigkeit der gesamten Windkraftanlage, muss diese auf einem entsprechend stabilen Fundament aufgestellt werden. Stabile Konstruktionen für Offshore-Windkraftanlagen sind z. B. ein Tripod, d. h. ein dreibeiniges Fundament, das wie ein Stativ am Meeresgrund angeordnet ist, oder ein Schwerkraftfundament, das entsprechende Betongewichte, die auf dem Meeresgrund liegen und die benötigte Stabilität liefern. Weitere Beispiele für geeignete Fundamente der erfindungsgemäßen Windkraftanlage sind z. B. Monopile, wobei es sich hierbei um eine einzelne Mastkonstruktion, die am Meeresgrund verankert ist, handelt oder Bucket-Fundamente, die aus einem nach unten geöffneten Stahlzylinder bestehen, der auf dem Meeresgrund angeordnet evakuiert und so zur Bildung eines stabilen Fundamentes in den Meeresgrund gedrückt wird. Die erwähnten Arten von Fundamenten sind ebenfalls nur beispielhaft zu verstehen und jede andere Art von Fundament kann, wenn es sich als günstig herausstellt, ebenfalls verwendet werden.

Der Grundgedanke der erfindungsgemäßen Windkraftanlage ist, diese mit einer Vorrichtung zur Nutzung der Wellenenergie zu kombinieren. Die in Fig. 1 dargestellte erfindungsgemäße Windkraftanlage ist mit einem OWC-System zur Ausnutzung der Wellenenergie kombiniert, wobei dies nicht einschränkend zu verstehen ist. Jede andere Art von Vorrichtung zur Ausnutzung von Wellenenergie kann ebenfalls mit der Windkraftanlage kombiniert werden. Vorteilhaft an einer solchen Kombination ist, dass gewöhnlich in Küstengewässern, in denen günstige Windbedingungen für den Einsatz einer Windkraftanlage herrschen, auch durch diesen Wind erzeugte Wellen, die zu dem Wind oftmals zeitversetzt entstehen, ausgenutzt werden können und folglich der Wirkungsgrad einer solchen Windkraftanlage verbessert werden kann.

Vorzugsweise wird die erfindungsgemäße Windkraftanlage mit einem Wellenenergieabnehmer 3 nach dem OWC-Prinzip kombiniert. Hierfür wird, wie in Fig. 1 gezeigt, in dem Turm 24 eine Röhre 31 angeordnet, in der durch die Wellenbewegung eine Luftströmung erzeugt werden kann. Die in der Röhre 31 erzeugte Luftströmung treibt eine in einer beliebigen Höhe angeordnete Turbine 32 an, die wiederum über mechanische Elemente 39, vorzugsweise eine Welle, mit dem in der Maschinengondel 2 angeordneten Generator 22 gekoppelt ist. Weiterhin umfasst der Wellenenergieabnehmer 3 am unteren Ende der Röhre 31 ein Ventil 35 zum luftdichten Abschließen der Röhre und weiter oben, unterhalb der Turbine 32 liegend, ein weiteres Ventil 33, das ebenfalls luftdicht verschließbar ist, womit die Röhre 31 mit den Ventilen 35 und 33 eine erste Druckkammer 310 bildet. Der weitere oberhalb und seitlich der Röhre 31 befindliche Raum bildet ebenfalls eine zweite Druckkammer 36, die an ihrem unteren Ende mit einem Ventil 34 luftdicht abschließbar ist. Zur Erhöhung bzw. zur Erzeugung des in der Röhre 31 erzeugten Luftstromes ist am unteren Ende der Windkraftanlage und oberhalb der Wasserlinie ein Abschnitt 37 vorgesehen, der nach unten geöffnet mit der Wasserlinie eine abgeschlossene Kammer 38 bildet. Die Kammer 38 kann beliebig ausgestaltet und in verschiedene Abschnitte unterteilt sein. Als besonders günstig hat sich eine Unterteilung in vier gleichgroße Kammern, die zusammen den Turm 24 umgeben, erwiesen. Jede andere Unterteilung ist aber ebenfalls möglich.

Wenn die Welle von unten durch den geöffneten Bereich des Abschnittes 37 in die Kammer 38 eindringt, wird die in der Kammer 38 vorhandene Luft durch das geöffnete Ventil 35 in die Röhre 31 gedrückt und umströmt die Turbine 32, wodurch diese angetrieben wird. Während dieses Vorgangs ist das Ventil 34 geschlossen, mit der Folge, dass sich in der zweiten Druckkammer 36 ein Überdruck bildet. Wenn die Welle ihre maximale Amplitude erreicht hat und zu fallen beginnt, wird das Ventil 35 geschlossen und das Ventil 34 geöffnet, wodurch sich der in der zweiten Druckkammer 36 gebildete Überdruck abbaut und ab der Nulllinie ein Unterdruck in der ersten Kammer 310 entsteht. Während dieses Vorgangs, d. h. Aufbau und Abbau des Über- bzw. Unterdruckes, wird die Turbine 32 angetrieben und die der Wellenbewegung entnommene Energie dem Generator 22 zur Umwandlung in elektrische Energie zugeführt.

Vorteilhaft an dieser in Bezug auf Druck abgeschlossenen Variante ist die Einstellbarkeit des Gleichgewichtsdrucks innerhalb der Röhre 31 bzw. der Druckkammer 36. Wenn der hierin herrschende Gleichgewichtsdruck so hoch gewählt wird, dass bei Bildung des Unterdrucks der Druck nicht unterhalb oder auf der Dampfdruckkurve von Wasser bei der entsprechenden Temperatur liegt, wird eine energieverbrauchende Bildung von Wasserdampf unterbunden.

Das unterhalb der Turbine vorgesehene Ventil 33 kann zur Zwischenspeicherung von erzeugtem Überdruck in der ersten Kammer 310 geschlossen oder als Überlastschutz verwendet werden.

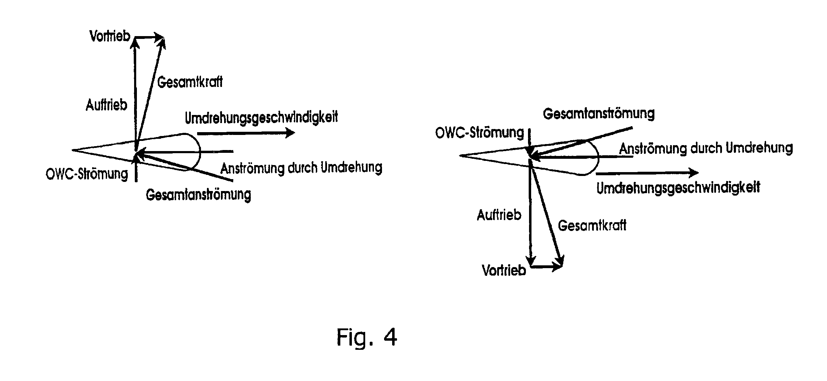

Alternativ zu dem dargestellten Druckkammersystem, in einer Ausführungsform, die nicht Teil der vorliegenden Erfindung ist, kann die Röhre 31 oberhalb der Turbine 32 über ein Klappen- bzw. Ventilsystem gegenüber der Umgebung der Windkraftanlage geöffnet sein. In diesem Fall würde die Turbine 32 bei Entstehung eines Wellenberges in der Kammer 38 von unten nach oben angeströmt werden, während die Strömungsrichtung im Falle eines entstehenden Wellentales entgegengesetzt gerichtet sein würde. Bei der Betriebsweise mit entgegengesetzten Strömungsrichtungen ist die Turbine 32 vorzugsweise eine Wells-Turbine, die sich unabhängig von der Anströmungsrichtung immer in die gleiche Richtung dreht. In Fig. 4 ist schematisch das Oberflächenprofil der Turbinenblätter einer Wells-Turbine und die an diese Blätter angreifenden Kräfte bei unterschiedlichen Anströmungsrichtungen gezeigt. Die Turbinenblätter sind, wie aus der Fig. 4 ersichtlich, im Profil symmetrisch, weshalb eine Wells-Turbine bei einer vorliegenden Luftströmung nicht selbstständig anläuft. Eine die Turbine antreibende Kraft resultiert nur zusammen mit der Anströmung auf Grund der Umdrehung.

Vorteilhaft an einer Wells-Turbine ist der annähernd widerstandslose Leerlaufbetrieb dieser Turbine. Das bedeutet, wenn, wie in Fig. 1 gezeigt, die Turbine 32 direkt auf die Welle 25 des Generators 22 wirkt, dass das Windrad die Turbine 32 mitdrehen kann, ohne einen Luftstrom innerhalb der Röhre 31 zu erzeugen.

Bei Betrieb einer Windkraftanlage ohne Getriebe 23 zur Anpassung der Drehzahlen des Windrades 21 an den Generator 22 kann die Turbine 32 mit der Welle 25 fest gekoppelt sein. In diesem Fall ist die Turbine vorzugsweise eine Wells-Turbine, die, wie erwähnt, in ihrem Leerlaufbetrieb annähernd widerstandslos angetrieben werden kann. Nachdem bei dieser direkten Kopplung die Frequenz des Windrades 21 und folglich der Welle 25 mit der optimalen Betriebsfrequenz der Wells-Turbine nicht übereinstimmen muss, kann an der Welle 39 der Turbine 32 vor/an der Kopplung mit der Welle 25 ein Getriebe (nicht gezeigt) zur Anpassung der Rotationsfrequenz der Turbine 32 vorgesehen sein.

Weiterhin kann bei Betrieb einer Windkraftanlagen mit Getriebe 23 die Wells-Turbine 32 auf die gleiche obige Weise mit der Welle 25 gekoppelt werden. Eine Anpassung der Betriebsfrequenz der Turbine 32 kann in diesem Fall auch durchgeführt werden, obwohl diese sich auf Grund des Getriebes 23 mit der Frequenz der Welle 25 dreht.

Wenn als Turbinentyp eine nur einseitig anströmbare Turbine verwendet wird, die keinen widerstandslosen Leerlauf aufweist, können die Welle 25 der Windkraftanlage und die Welle 39 der Turbine über eine Kupplung oder ein Getriebe (nicht gezeigt) derart getrennt sein, dass das Windrad die Turbine nicht zwingend antreibt, wenn dies weder nötig noch sinnvoll ist.

Vorteilhaft an dem Einsatz eines Getriebes 23 und eines weiteren Getriebes oder Kupplung für die Verbindung zwischen den Wellen des Generators 22 und der Turbine 32 ist der mögliche getrennte Betrieb der Windkraftanlage und des Wellenenergieabnehmers 3. Es ist klar, dass das Getriebe 23 hierfür einen Leerlauf aufweist, in dem die Welle 25 und das Windrad 21 vollständig getrennt sind. Wenn eine solche getrennte Betriebsmöglichkeit mit einer Wells-Turbine kombiniert wird, können in der Windkraftanlage Mittel zum Anlaufen der Wells-Turbine vorgesehen sein, weil diese, wie oben erwähnt, nicht selbstständig anläuft. In der Regel wird aber davon auszugehen sein, dass bei einer nutzbaren Wellenbewegung ein genügend hohes Windaufkommen zum Anlaufen der Wells-Turbine zur Verfügung stehen wird und dass ein Einsatz zusätzlicher Mittel nicht notwendig sein wird.

Weiterhin vorteilhaft an den oben dargestellten Kopplungen ist die gemeinsame Nutzung eines einzigen Generators 22 zweier verschiedener Energiegewinnungsformen. Alle oben dargestellten und erläuterten Kopplungen sind sowohl mit einem Asychron- oder Sychrongenerator als auch einem anderen Generator kombinierbar. Die aufgrund dieser gemeinsamen Nutzung möglicherweise entstehenden Spannungsschwankungen können mit den vorher dargestellten elektrotechnischen Mitteln, wie z. B. einen Gleichrichter in Kombination mit einem Wechselrichter oder einem Frequenzumrichter, ausgeglichen werden.

Bezüglich des Wirkungsgrades des gesamten Wellenenergieabnehmers können bei dem oben dargestellten System einige Parameter zur Anpassung an die vorliegende Wellenbedingung verändert werden. Allgemein handelt es sich bei dem Wellenenergieabnehmer 3 nach dem OWC-Prinzip um ein Schwingungssystem, das optimal arbeitet, wenn die Frequenz der Meereswellen die Resonanzfrequenz, bei der die Amplitude der Systemschwingung des Wellenenergieabnehmers ein lokales Maximum aufweist, trifft. Die Resonanzfrequenz des gesamten OWC-Systems hängt z. B. von der Geometrie des Einlaufs des Wassers in die Röhre 31, den Luftwiderständen in der Röhre 31 bzw. der Druckkammern 36 und 310, dem Widerstand der Turbine 32 und dem Luftvolumen innerhalb der Kammer 38 ab. Zur Veränderung der Resonanzfrequenz des Gesamtsystems können folglich einige Maßnahmen ergriffen werden, um die Betriebsbedingung des Wellenenergieabnehmers anzupassen.

In dem oben dargestellten abgeschlossenen System kann z. B. der in der Röhre 1 und den Druckkammern 36, 310 vorherrschende Gleichgewichtsdruck oder die Ventilsteuerungen der Ventile 35, 33 und 34 geändert werden. Über die Ventile 34, 35 und 33 können die Widerstände der Strörriungsführungen verändert werden. Eine weitere Maßnahme zur Veränderung der Resonanzfrequenz des gesamten Systems ist, wie erwähnt, die Veränderung des Volumens der Kammer 38, die auf mehrere Art und Weisen bewerkstelligt werden kann. Z. B. können volumenverändernde Expansionskörper in der Kammer 38 angeordnet sein oder der Abschnitt 37 kann selbst derart verstellbar sein, dass sich das Volumen in der Kammer 38 verändert.

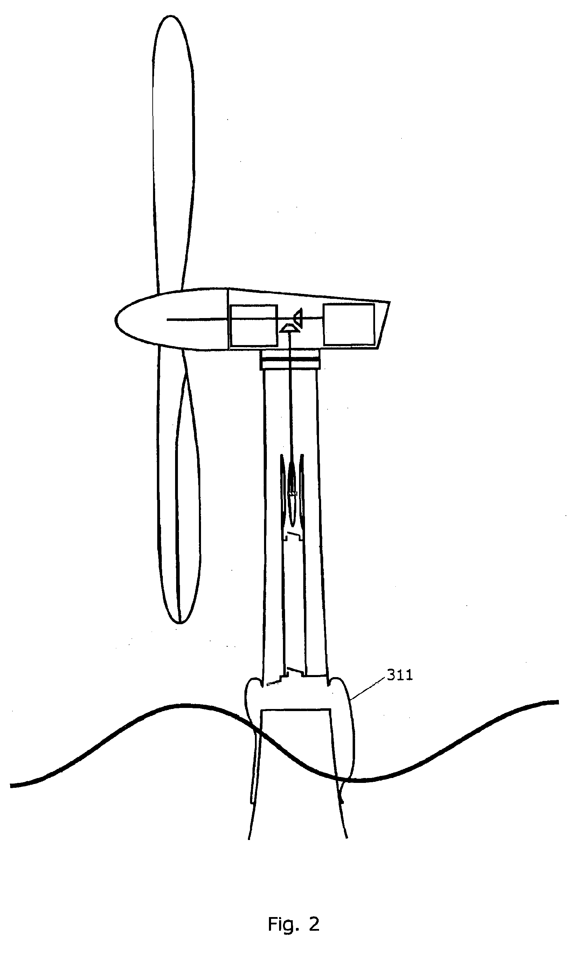

In Fig. 2 ist eine weitere Ausführungsform der Windkraftanlage dargestellt, wobei die Windkraftanlage keinen Abschnitt 37 zur Bildung der Kammer 38 aufweist. Stattdessen wird das durch die Wellenbewegung veränderte Volumen durch einen flexiblen Körper 311 gebildet, auf den die Welle zur Erzeugung des Luftstromes in der Röhre 31 einwirken kann. Vorteilhaft an dieser Ausführungsform ist, dass kein Wasser in die Röhre 31 oder die Druckkammern 36, 310 durch die Ventile 34, 35 eintreten kann, wodurch das Erfordernis des Einsatzes von salzwasserbeständigen Materialien oder Lackierungen für die Röhre 31, die Druckkammern 36, 310, die Turbine 32 und die Ventile 34 und 35 entfällt.

Der im Volumen veränderbare Körper 311 ist in Fig. 2 nur schematisch dargestellt. Er kann aus jeglichen geeigneten Materialien hergestellt sein und verschiedene Elemente aufweisen, die eine richtung- und volumenabhängige Kompression bzw. Dekompression ermöglichen. Weiterhin ist der Einsatz spezieller Falttechniken des Körpers 311 denkbar. Die anderen Elemente der Windkraftanlage sind die gleichen wie unter Bezug auf Fig. 1 und werden aus diesem Grund nicht nochmals beschrieben werden.

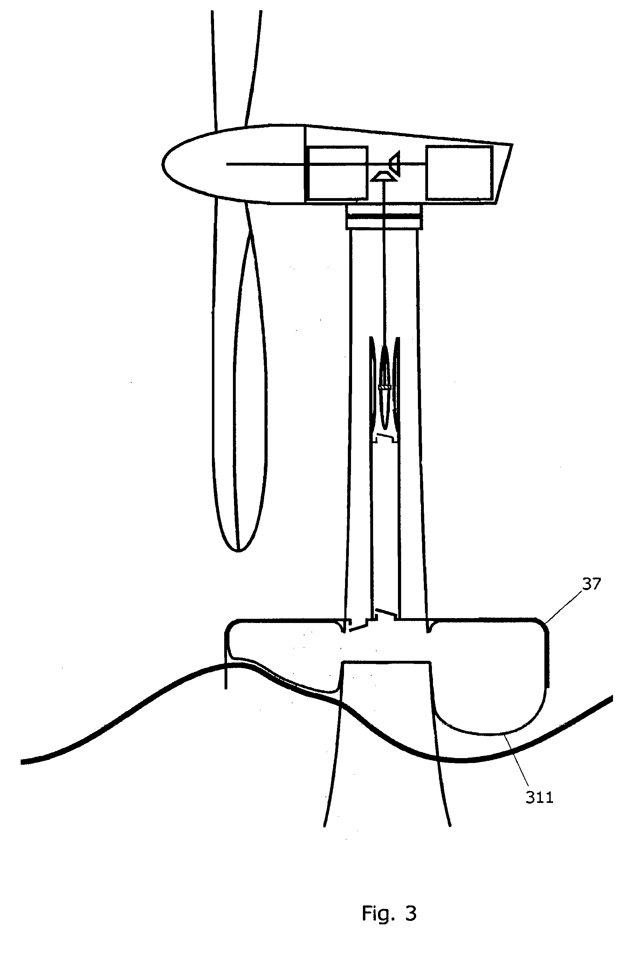

Fig. 3 zeigt eine dritte Ausführungsform der erfindungsgemäßen Windkraftanlage, wobei diese die Vorteile der ersten und der zweiten Ausführungsform vereinigt. Wie aus Fig. 3 ersichtlich, umfasst das untere Ende der Windkraftanlage ebenfalls einen eine Kammer bildenden Abschnitt 37, in dem der im Volumen veränderbare Körper 311 angeordnet ist. Der Abschnitt 37 braucht nicht wie in der ersten Ausführungsform unter die Wasserlinie zu reichen, sondern hat lediglich stabilisierende Eigenschaften. Durch den Abschnitt 37 wird verhindert, dass der im Volumen veränderbare Körper der Wellenbewegung ausweicht und es folglich zu einer gleichmäßigeren Kompression bzw. Dekompression des Körpers 311 kommen kann. In der dritten Ausführungsform aus Fig. 3 kann der Abschnitt 37 wie in der ersten Ausführungsform aus Fig. 1 aber dennoch unter die Wasseroberfläche reichen, damit ein sich bildendes Wellental die Dekompression des Körpers 311 besser unterstützt.

Für alle Ausführungsformen, die einen Abschnitt 37 zur Bildung einer Kammer 38 aufweisen, kann der Abschnitt 37 derart variabel sein, dass durch den Tidenhub sich verändernde Wasserstände nicht dazu führen, dass Luft in die Kammer 38 eindringen und den Wirkungsgrad des Wellenenergieabnehmers vermindern kann. Weiterhin können der Abschnitt 37 und die Kammer 38 für alle Ausführungsformen beliebig unterteilt sein und mehrere Kammern 38 bzw. Körper 311 aufweisen.

Im Ergebnis kann eine Windkraftanlage vorteilhaft mit einem Wellenenergieabnehmer erweitert und der Wirkungsgrad erhöht werden.

## Patentansprüche

1. Anordnung umfassend eine Windkraftanlage und einen Wellenenergie abnehmer, wobei die Windkraftanlage mit dem Wellenenergieabnehmer (3) gekoppelt ist, wobei der Wellenenergieabnehmer aufweist;
eine in einem Turm (24) der Windkraftanlage innerhalb einer Röhre (31) angeordnete Turbine (32),
einen mit der Wasseroberfläche eine Kammer (38) bildenden Abschnitt (37), der am unteren Ende des Turmes angeordnet ist,
eine erste Druckkammer (310), die in der Röhre durch ein an einem unteren Ende der Röhre liegendes erstes Ventil (35) und ein in der Röhre unterhalb der Turbine liegendes zweites Ventil (33) ausgebildet ist, wobei die erste Druckkammer (310) über das erste Ventil (35) mit der Kammer (38) verbunden ist, und
eine über der Turbine und seitlich der Röhre in dem Turm ausgebildete zweite Druckkammer (36), die an ihrem unteren Ende mit einem dritten Ventil (34) verschließbar ist, wobei die zweite Druckkammer über das dritte Ventil mit der Kammer (38) verbunden ist, wobei
die erste und die zweite Druckkammer (36, 310) durch die Ventile (33, 34, 35) derart verbunden sind, dass ein sich durch die Wasserbewegung in der ersten und zweiten Druckkammer (36, 310) bildender Über- und Unterdruck über die Turbine (32) ausgleichbar ist.

2. Anordnung gemäß Anspruch 1, wobei die Windkraftanlage ein Windrad (21) und einen Generator (22) umfasst, wobei das Windrad (21) mit dem Generator (22) verbunden ist und der Wellenenergieabnehmer (3) mit der Windkraftanlage zwischen dem Windrad (21) und dem Generator (22) gekoppelt ist.

3. Anordnung gemäß Anspruch 1, wobei die Windkraftanlage ein Windrad (21), einen Generator (22) und ein Getriebe (23), das mit dem Windrad (21) und dem Generator (22) verbunden ist, umfasst, wobei der Wellenenergieabnehmer (3) mit der Windkraftanlage (1) zwischen dem Getriebe (23) und dem Generator (22) gekoppelt ist.

## Claims

1. An arrangement comprising a wind power facility and a wave energy absorber, the wind power facility being coupled with the wave energy absorber (3), wherein the wave energy absorber comprises:
a turbine (32) arranged in a tower (24) of the wind power facility inside of a pipe (31),
a portion (37) which is arranged at a lower end of the tower and which forms with the surface of the water a chamber (38),
a first pressure chamber (310) formed in the pipe by a first valve (35) located at a lower end of the pipe and a second valve (33) located In the pipe below the turbine, wherein the first pressure chamber (310) is connected to the chamber (38) via the first valve (35), and
a second pressure chamber (36) formed in the tower above the turbine and at the side of the pipe, and closable at its lower end by a third valve (34), wherein the second pressure chamber is connected to the chamber (38) via the third valve, wherein
the first and the second pressure chamber (36, 310) are connected via the valves (33, 34, 35) such that an overpressure and an underpressure in the first and the second pressure chamber (36, 310) generating by the movement of the water is compensable via the turbine (32).

2. Arrangement according to claim 1, wherein the wind power facility comprises a wind wheel (21) and a generator (22), wherein the wind wheel (21) is connected to the generator (22) and the wave energy absorber (3) is coupled with the wind power facility between the wind wheel (21) and the generator (22).

3. Arrangement according to claim 1, wherein the wind power facility comprises a wind wheel (21), a generator (22) and a gear mechanism (23), which is connected to the wind wheel (21) and to the generator (22), wherein the wave energy absorber (3) is coupled with the wind power facility (1) between the gear mechanism (23) and the generator (22).

## Revendications

1. Ensemble comprenant une éolienne et un système absorbeur d'énergie provenant de la houle, l'éolienne étant couplée au système absorbeur d'énergie provenant de la houle (3), le système absorbeur d'énergie provenant de la houle présentant :
une turbine (32) disposée dans une tour (24) de l'éolienne à l'intérieur d'un tube (31),
un segment (37) formant avec la surface de l'eau une chambre (38), qui est disposée au niveau de l'extrémité inférieure de la tour,
une première chambre de pression (310), qui est réalisée dans le tube par une première soupape (35) se trouvant au niveau de l'extrémité inférieure du tube et par une deuxième soupape (33) se trouvant dans le tube sous la turbine, la première chambre de pression (310) étant reliée, par l'intermédiaire de la première soupape (35), à la chambre (38), et
une deuxième chambre de pression (36) réalisée dans la tour au-dessus de la turbine et sur les côtés du tube, laquelle peut être fermée au niveau de son extrémité inférieure par une troisième soupape (34), la deuxième chambre de pression étant reliée par l'intermédiaire de la troisième soupape à la chambre (38),
la première chambre de pression et la deuxième chambre de pression (36, 310) étant reliées par les soupapes (33, 34, 35) de telle manière qu'une surpression et une dépression se formant du fait du mouvement de l'eau dans la première chambre de pression et dans la deuxième chambre de pression (36, 310) peuvent être compensées par l'intermédiaire de la turbine (32).

2. Ensemble selon la revendication 1, l'éolienne comprenant une roue éolienne (21) et un générateur (22), la roue éolienne (21) étant reliée au générateur (22) et le système absorbeur d'énergie provenant de la houle (3) étant couplé à l'éolienne entre la roue éolienne (21) et le générateur (22).

3. Ensemble selon la revendication 1, l'éolienne comprenant une roue éolienne (21), un générateur (22) et une transmission (23), qui est reliée à la roue éolienne (21) et au générateur (22), le système absorbeur d'énergie provenant de la houle (3) étant couplé à l'éolienne (1) entre la transmission (23) et le générateur (22).
